# EUROPÄISCHE PATENTSCHRIFT

(11) **EP 2 861 356 B1**
(45) Veröffentlichungstag und Bekanntmachung des Hinweises auf die Patenterteilung: **28.09.2016**
(21) Anmeldenummer: 13731312.8
(22) Anmeldetag: 12.06.2013
(51) Int. Cl.: B05B 13/02, B65G 39/18, B65G 21/20, B05B 15/12

(54) **BESCHICHTUNGSANLAGE**
COATING SYSTEM
DISPOSITIF DE REVÊTEMENT

(30) Priorität: 15.06.2012 DE 102012105243
(43) Veröffentlichungstag der Anmeldung: 22.04.2015
(73) Patentinhaber: Josef Schiele OHG, 56651 Niederzissen (DE)
(72) Erfinder: SCHIELE, Stefan, 56651 Niederzissen (DE)
(74) Vertreter: Wolff, Felix
(86) Internationale Anmeldenummer: PCT/EP2013/062190
(87) Internationale Veröffentlichungsnummer: WO 2013/186281

(56) Entgegenhaltungen:
- EP-A1- 0 009 508
- DE-A1- 10 062 084
- DE-A1-102008 036 550

## Beschreibung

Die vorliegende Erfindung betrifft eine Beschichtungsanlage zur Beschichtung eines langgestreckten Holz-, Kunststoff- und/oder Metallprofils mit einem Beschichtungsmittel, mit einer Vorbehandlungsstation, einer Beschichtungsstation und/oder einer Trocknungsstation, wobei ein Transportmittel das Profil entlang der Beschichtungsanlage transportiert.

Derartige Beschichtungsanlagen sind aus dem Stand der Technik bekannt und werden beispielsweise dazu eingesetzt, um Parkettdielen mit einem Lack oder dergleichen zu beschichten. Auch Transpormittel mit profilierten Rollen, die eine Auflagefläche und mindestens einen Absatz aufweisen, sind bekannt und in den Dokumenten DE 100 62 084 A1 und EP 0 009 508 A1 beschrieben.

Es besteht aber der Wunsch, auch komplexere Profile, wie beispielsweise Tür- oder Fenster-Profile, beschichten zu können, um diese Profile in unterschiedlichen Farben und/oder vor Umwelteinflüssen geschützt anbieten zu können.

Es war deshalb die Aufgabe der vorliegenden Erfindung, eine Beschichtungsanlage zur Verfügung zu stellen, mit der unterschiedlichste, komplexe Tür- und/oder Fensterprofile beschichtet werden können.

Gelöst wird die Aufgabe mit einer Beschichtungsanlage zur Beschichtung eines langgestreckten Holz-, Kunststoff- und/oder Metallprofils mit einem Beschichtungsmittel, mit einer Vorbehandlungsstation, einer Beschichtungsstation und/oder einer Trocknungsstation, wobei ein Transportmittel das Profil entlang der Beschichtungsanlage transportiert, wobei das Transportmittel eine profilierte Rolle mit einer im Wesentlichen horizontalen Drehachse aufweist, die mindestens eine Einbuchtung und mindestens einen Absatz und/oder eine Auflagefläche, vorzugsweise jedoch keine feste Anschlagsseite aufweist.

Die zu diesem Gegenstand der vorliegenden Erfindung gemachten Offenbarungen gelten für die anderen Gegenstände der vorliegenden Erfindung gleichermaßen und umgekehrt.

Die vorliegende Erfindung betrifft eine Beschichtungsanlage mit der langgestreckte Holz-, Kunststoff-und/oder Metallprofile mit einem Beschichtungsmittel, beispielsweise mit einem, insbesondere wasserlöslichen, Lack beschichtet werden können. Dabei wird insbesondere der Umfang des Profils teilweise oder vollständig beschichtet. Diese Beschichtungsanlage weist vorzugsweise eine Vorbehandlungsstation auf, in der das Profil zunächst von Rückständen befreit wird. Im Anschluss an die Entfernung der Rückstände kann eine Vorbereitung der Oberfläche zum Lackieren erfolgen. Anschließend erfolgt die Beschichtung des Profils in einer Beschichtungsstation in der die Oberfläche des Profils beschichtet wird.

Das aufgetragene Beschichtungsmittel, beispielsweise der Lack, wird nachfolgend in einer Trocknungsstation getrocknet.

Erfindungsgemäß weist diese Beschichtungsanlage ein Transportmittel auf, das die Profile vom Einlauf bis zum Auslauf der Beschichtungsanlage transportiert. Weiterhin erfindungsgemäß weist dieses Transportmittel mindestens eine, vorzugsweise eine Vielzahl von profilierten Rollen, d. h. Rollen, die keinen konstanten Querschnitt aufweisen, auf. Diese profilierten Rollen drehen sich vorzugsweise um eine im Wesentlichen horizontale Drehachse. Jede Rolle ist vorzugsweise mit demselben Profil versehen, das erfindungsgemäß mindestens eine Einbuchtung, mindestens einen Absatz und/oder eine Auflagefläche aufweist. Dadurch führen die Rollen das Profil bei seinem Transport durch die erfindungsgemäße Beschichtungsanlage, ohne dass die zu beschichtenden Flächen des Profils von der Rolle berührt würden. Vorzugsweise weist jede Rolle einer Mehrzahl von, insbesondere unterschiedlichen, Einbuchtungen, Absätzen und/oder Auflageflächen auf, so dass unterschiedlichste Profile auf der erfindungsgemäßen Beschichtungsanlage beschichtet werden können, ohne dass die Rollen ausgetauscht werden müssten.

Weiterhin erfindungsgemäß weist das Transportmittel und/oder profilierte Rolle keine, für alle zu beschichtenden unterschiedlichen Profile feste Anschlagseite auf, d.h. die unterschiedlichen Profile weisen nicht immer denselben Anschlag auf sondern der Anschlag kann von Profil zu Profil unterschiedlich sein. Daraus resultiert ein hohes Maß an Flexibilität für die Beschichtung der Profile.

Vorzugsweise sind die Rollen mittels eines Schnellverschlusses an ihrer jeweiligen Drehachse gelagert, so dass sie schnell ausgetauscht werden können.

Vorzugsweise weist die erfindungsgemäße Beschichtungsanlage ein Display und ein Eingabemittel auf. Mit dem Eingabemittel kann der Betreiber der Beschichtungsanlage mitteilen, welches Profil bei einem Profilwechsel als nächstes beschichtet werden soll. Das Display zeigt dem Betreiber dann an, wie er das zu beschichtende Profil auf die horizontale Rolle auflegen soll, d. h. welche Anlagefläche des Profils mit welcher Anlagefläche der Rolle in Kontakt kommen soll und/oder welche Auflagefläche des Profils auf welcher Auflagefläche der Rolle auflegen soll.

Die im Wesentlichen horizontalen Rollen können angetrieben sein oder lediglich frei drehend vorgesehen sein.

Gemäß einem weiteren oder bevorzugten Gegenstand der vorliegenden Erfindung weist das Transportmittel mehrere Rollen jeweils mit einer im Wesentlichen vertikalen Drehachse auf, die jeweils in zwei Raumrichtungen, besonders bevorzugt einer vertikalen und einer horizontalen Raumrichtung, einstellbar sind. Diese Rollen dienen als seitliche Führung für das zu beschichtende Profil.

Die zu diesem Gegenstand der vorliegenden Erfindung gemachten Offenbarungen gelten für die anderen Gegenstände der vorliegenden Erfindung gleichermaßen und umgekehrt.

Durch die Einstellungsmöglichkeit der Rollen in zwei Raumrichtungen können diese in optimaler Weise an das jeweilige zu beschichtende Profil angepasst werden. Vorzugsweise erfolgt die Einstellung der Rollen bei einem Profilwechsel automatisch. Vorzugsweise sind jeweils zwei Rollen einander gegenüberliegend, rechts und links von dem Profil, vorgesehen. Bezogen auf die Transportrichtung der Profile, wechseln sich vorzugsweise jeweils zwei Rollen mit einer vertikalen Drehachse mit einer profilierten Rolle mit einer im Wesentlichen horizontalen Drehachse ab. Auch die Rollen mit der im Wesentlichen vertikalen Drehachse werden so mit dem zu beschichtenden Profil in Anlage gebracht, dass sie nicht an zu beschichtenden Flächen anliegen. Vorzugsweise weisen die Rollen mit der im Wesentlichen vertikalen Drehachse ebenfalls keinen konstanten Querschnitt, sondern mindestens einen Absatz auf.

Bei der Einstellung der Rollen auf ein neues Profil werden vorzugsweise mehrere Rollen auf einer Seite des Profils gleichzeitig eingestellt. Dadurch ist es ausreichend, dass lediglich ein Antriebsmotor eine Mehrzahl von Rollen in mindestens eine Raumrichtung verstellt.

Vorzugsweise ist pro Raumrichtung mindestens ein Stellmotor vorgesehen.

Die im Wesentlichen vertikalen Rollen können angetrieben sein oder lediglich frei drehend vorgesehen sein.

Gemäß einer bevorzugten Ausführungsform weist das Transportsystem einen Oberdruck auf, der insbesondere vor der Beschichtungsstation vorgesehen ist und das jeweilige Profil gegen die Rollen mit einer im Wesentlichen horizontalen Drehachse drückt.

Bis zum Verlassen der Beschichtungsstation werden die jeweiligen Profile vorzugsweise so transportiert, dass sich ihre jeweiligen Enden berühren. Besonders bevorzugt werden die Profile nach Verlassen der Beschichtungsstation jedoch jeweils so beschleunigt, dass sich ein Abstand zwischen ihnen einstellt, d. h. dass sie vereinzelt sind.

Am Ende einer zu beschichtenden Charge wird vorzugsweise ein so genannter "Dummy" vorgesehen, durch den die erfindungsgemäße Beschichtungsanlage vorzugsweise erkennt, dass ein neues Profil beschichtet werden soll. Dieser "Dummy" verbleibt vorzugsweise in der Beschichtungsstation. Der "Dummy" kann durch das erste Profil einer neuen Charge wieder der Beschichtungsstation herausgedrückt werden. Alternativ kann der "Dummy" auch von Hand aus der Beschichtungsanlage entfernt werden.

Gemäß noch einem weiteren bevorzugten oder erfindungsgemäßen Gegenstand der vorliegenden Erfindung sind die Rollen zumindest teilweise geerdet, so dass keine statische Aufladung, insbesondere der Profile, auftreten kann.

Gemäß noch einem weiteren bevorzugten oder erfindungsgemäßen Gegenstand der vorliegenden Erfindung weist das Transportmittel einen Überheber auf, der das Profil von dem Transportmittel abhebt und auf einem weiteren Transportmittel absetzt, wobei der Überheber eine Lagerbacke aufweist, die zumindest im Wesentlichen dieselbe Profilierung aufweist wie die profilierte Rolle mit der im Wesentlichen horizontalen Drehachse.

Die zu diesem Gegenstand der vorliegenden Erfindung gemachten Offenbarungen gelten für die anderen Gegenstände der vorliegenden Erfindung gleichermaßen und umgekehrt.

Vorzugsweise stehenden beide Transportmittel beim Abheben bzw. Absetzen des jeweiligen Profils still bzw. fahren mit verringerter Geschwindigkeit.

Gemäß einem weiteren oder bevorzugten Gegenstand der vorliegenden Erfindung weist die Vorbehandlungsstation ein sich selbst erneuerndes Reinigungsmittel, insbesondere ein Reinigungstuch, auf.

Die zu diesem Gegenstand der vorliegenden Erfindung gemachten Offenbarungen gelten für die anderen Gegenstände der vorliegenden Erfindung gleichermaßen und umgekehrt.

Ein sich selbst erneuerndes Reinigungsmittel im Sinne der Erfindung bedeutet, dass ein verunreinigtes Reinigungsmittel selbsttätig erneuert wird.

Vorzugsweise handelt es sich bei dem Reinigungsmittel um ein Reinigungstuch aus Papier, Zellstoff, Stoff oder dergleichen. Dieses Reinigungstuch wird vorzugsweise auf einer Vorratsrolle vorgesehen und das durch die Reinigung verunreinigte Reinigungstuch wird, besonders bevorzugt, wiederum auf einer Rolle aufgerollt. Das Ab- bzw. Aufrollen des Reinigungstuches kann kontinuierlich oder intermittierend erfolgen, wobei die Bewegungsrichtung des Reinigungstuches besonders bevorzugt entgegengesetzt der Transportrichtung der Profile ist. Das Reinigungstuch wird vorzugsweise gegen das zu beschichtende Profil, insbesondere gegen Flächen des Profils, die beschichtet werden sollen, gedrückt. Durch die Relativbewegung zwischen dem Reinigungstuch und dem Profil werden Verunreinigungen von dem Profil entfernt.

Vorzugsweise ist stromaufwärts von der Reinigung eine Vorreinigung vorgesehen, in der lose anhaftender Schmutz entfernt und/oder die zu beschichtende Oberfläche des Profils aufgeraut wird. Beispielsweise erfolgt diese Vorreinigung durch Bürsten, insbesondere sehr feinen Buntmetall- besonders bevorzugt Bronzebürsten.

Stromabwärts von der Vorreinigung ist vorzugsweise eine Deionisierung der Profile vorgesehen. Anschließend oder alternativ erfolgt vorzugsweise der Auftrag eines, insbesondere flüssigen oder gasförmigen, Reinigungsmittels, beispielsweise mit Düsen, insbesondere Feinzerstäuberdüsen. Dieses Reinigungsmittel wird dann vorzugsweise mit dem Reinigungstuch wieder von dem Profil abgewischt. Im Anschluss an das Abwischen wird das Profil vorzugsweise mit gefilterter Luft von Restreinigungsmittel befreit, indem dieses beispielsweise abgeblasen wird. Die Vorbehandlungsstation befindet sich vorzugsweise in einem unter Unterdruck stehenden Raum, so dass die anfallenden Dämpfe von den Reinigungsmitteln abgesaugt werden können.

Alternativ oder zusätzlich kann das Profil beflammt werden, beispielsweise mit einer Gasflamme oder einem Plasmastrahl.

Gemäß noch einem weiteren oder bevorzugten Gegenstand der vorliegenden Erfindung besteht die Beschichtungsstation der Beschichtungsanlage aus zwei Einheiten, die jeweils zwei Beschichtungskammern und ein Transportmittel aufweisen und die jeweils quer zur Transportrichtung des Werkstücks verschieblich vorgesehen sind.

Die zu diesem Gegenstand der vorliegenden Erfindung gemachten Offenbarungen gelten für die anderen Gegenstände der vorliegenden Erfindung gleichermaßen und umgekehrt.

Bezogen auf die Laufrichtung der Profile sind die beiden Einheiten hintereinander angeordnet.

Vorzugsweise weist jede Beschichtungskammer eine Einlauf- und eine Auslaufmatrize auf, die jeweils an den Querschnitt des zu beschichtenden Profils angepasst sind.

Dadurch dass die Beschichtungsstation zwei Einheiten mit jeweils zwei Beschichtungskammern aufweist, ist es möglich, die Anlage sehr schnell auf ein neues Profil und/oder auf ein neues Beschichtungsmedium umzurüsten, da von den vier Beschichtungskammern immer nur eine für Beschichtungen des jeweiligen Profils im Einsatz ist. Bei der Einheit, deren Beschichtungskammer nicht im Einsatz ist, wird deren Transportmittel dazu genutzt, das Profil weiter zu transportieren.

Gemäß einer bevorzugten Ausführungsform sind jeweils zwei Beschichtungskammern rechts und zwei links von dem Transportmittel vorgesehen und die beiden Beschichtungskammern auf einer Seite jeweils an dasselbe Beschichtungsmittel angeschlossen.

Gemäß noch einer weiteren bevorzugten oder erfindungsgemäßen Ausführungsform der vorliegenden Erfindung ist vorgesehen, dass sich stromabwärts von der Vorbehandlungsstation und/oder von der Beschichtungsstation eine Überdruckkammer über dem Transportmittel befindet. Durch diese Überdruckkammer wird sichergestellt, dass keine staubhaltige Luft in Kontakt mit dem gereinigten und/oder beschichteten Profil gelangt. Vorzugsweise wird der Überdruck mit gereinigter, insbesondere gefilterter, Luft erzeugt.

Im Folgenden werden die Erfindungen anhand der Figuren 1 - 10 erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
- **Figur 1**: zeigt die erfindungsgemäße Beschichtungsanlage.
- **Figur 2**: zeigt das Führungsmittel der Beschichtungsanlage.
- **Figur 3**: zeigt die Profilierung der Transportmittel.
- **Figur 4**: zeigt weitere Details des Führungsmittels, insbesondere die vertikal angeordneten Führungsrollen zwischen den eigentlichen Transportrollen.
- **Figur 5**: zeigt die Reinigung des Profils mit einem Tuch.
- **Figur 6**: zeigt Details der Beschichtungsstation für einen schnellen Farbbzw. Profilwechsel.
- **Figur 7**: zeigt den Einlaufbereich der Beschichtungsstation.
- **Figur 8**: zeigt den Überheber.
- **Figur 9**: zeigt den Übergabebereich zwischen dem Führungsmittel und der Trocknungsstation.
- **Figur 10**: zeigt den Auslaufbereich der Trocknungsstation.

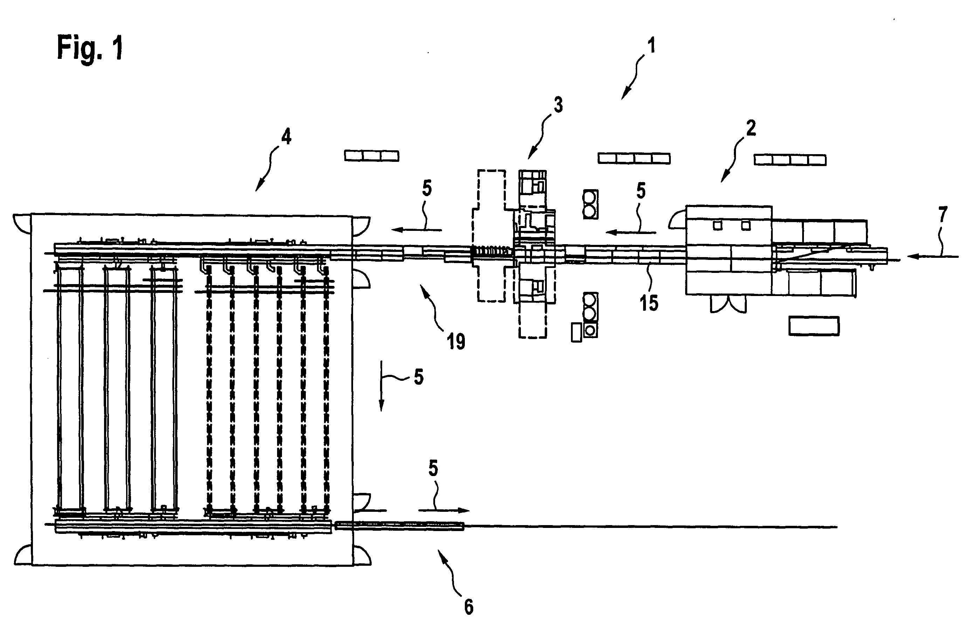

Figur 1 zeigt die erfindungsgemäße Beschichtungsanlage 1, die in dem vorliegenden Fall eine Vorbehandlungsstation 2, eine Beschichtungsstation 3 und eine Trocknungsstation 4 aufweist. Die zu beschichtenden Profile werden im Einlauf 7 auf ein Transportmittel 15 aufgelegt und sodann von diesem Transportmittel 15 in die Vorbehandlungsstation transportiert. Dort findet die Reinigung des Profils, insbesondere von dessen zu beschichtenden Flächen, statt. Vorzugsweise weist die Reinigung eine Vorreinigung auf, bei der lose anhaftender Schmutz, beispielsweise mit Bürsten, insbesondere mit feinen Buntmetall- insbesondere Bronzebürsten entfernt und gegebenenfalls gleichzeitig die Oberfläche der Profile leicht aufgeraut wird. Im Anschluss daran folgt eine Deionisierung der Werkstücke über eine entsprechende Vorrichtung und anschließend beispielsweise eine chemische Vorbehandlung der Profile mit einer flüssigen oder gasförmigen Substanz, die beispielsweise mittels Feinzerstäubungsdüsen auf das Profil aufgetragen und anschließend mit einem Abwischtuch wieder entfernt wird.

Alternativ oder zusätzlich kann in der Vorbehandlungsstation eine Beflammung der Profile, beispielsweise mittels einer Gasflamme oder einem Plasmastrahl, erfolgen, beispielsweise um die Oberfläche des Profils zu aktivieren.

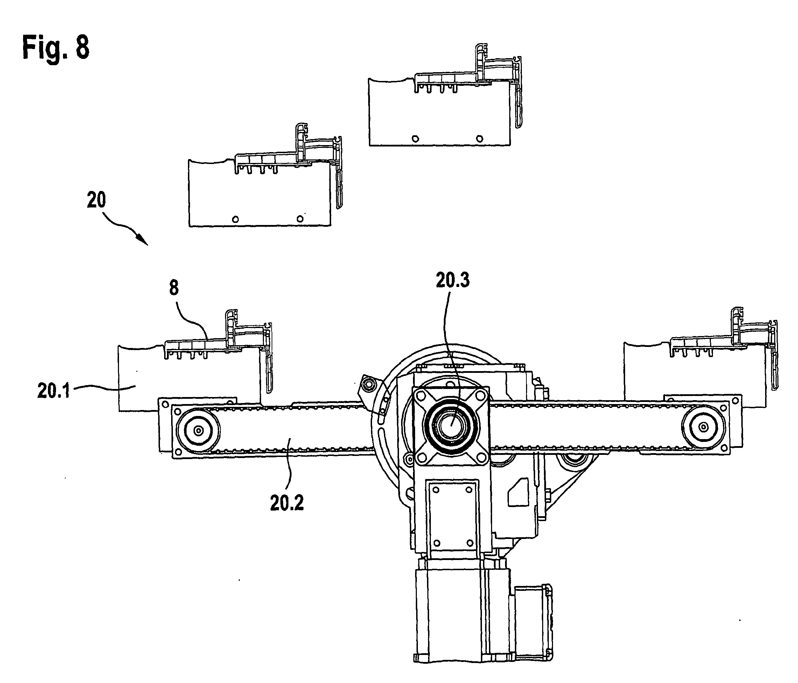

Anschließend wird das Profil mit dem Transportmittel 15 in der durch den Pfeil 5 dargestellten Richtung in die Beschichtungsstation transportiert. Vorzugsweise ist der Bereich zwischen der Vorbehandlungsstation 2 und der Beschichtungsstation 3 eingehaust, insbesondere mittels einer Überdruckeinhausung, um zu verhindern, dass die gereinigten Profile erneut verschmutzt werden. Bis zum Auslauf der Beschichtungsstation 3 werden die Profile so transportiert, dass sich ihre Stirnseiten jeweils berühren. Die Beschichtungsstation 3 weist mindestens eine Beschichtungskammer auf, durch die das Profil hindurchtransportiert und dabei beschichtet wird. Die Beschichtung kann dabei auf dem äußeren Umfang des Profils und/oder auf innenliegenden Flächen erfolgen, wobei die Farben jeweils unterschiedlich sein können. Auch der äußere Umfang kann z.B mit unterschiedlichen Farben beschichtet werden. Die Beschichtungskammer weist vorzugsweise eine Einlauf- und eine Auslaufmatrize auf, deren Querschnitt an den Querschnitt des zu beschichtenden Profils angepasst ist, so dass zwischen der Matrize und dem Profil nur ein kleiner Spalt vorhanden ist. Innerhalb der Kammer herrscht vorzugsweise ein leichter Unterdruck. Im Bereich der Einlaufmatrize sind vorzugsweise eine Vielzahl von Beschichtungsmittelsprühdüsen angeordnet, die das Beschichtungsmedium auf das Profil auftragen. In der Beschichtungskammer, insbesondere im Bereich der Auslaufmatrize, wird überschüssiges Beschichtungsmaterial wieder vom dem Profil abgesaugt, insbesondere in dem Falschluft durch den Spalt zwischen Matrize und Profil gezogen wird. Nach dem Lackieren laufen die Profile vorzugsweise über eine Beschleunigungsstrecke, insbesondere einen Beschleunigungsrollengang, wodurch eine Lücke zwischen den Profilen hergestellt wird. Diese Lücke wird insbesondere dafür benötigt, um die Profile von dem Transportmittel 15 in die Trocknungsstation 4 zu transferieren. In dem Trockner der Trocknerstation werden die Profile, wie ebenfalls durch den Pfeil 5 symbolisiert kontinuierlich oder intermittierend transportiert. Die Laufrichtung des Transportmittels in dem Trockner ist hier rechtwinklig zur Transportrichtung in der Beschichtungsstation vorgesehen. Dafür weist der Trockner ein Transportmittel auf, das einspurig oder mehrspurig, hier zweispurig, vorgesehen ist, d.h. es werden zwei Profile parallel, hier nebeneinander, durch den Trockner transportiert. Gesteuert durch eine Lichtschranke wird der Transport des jeweiligen Profils entweder vor der einen oder vor der anderen Spur gestoppt und dann das jeweilige Profil aus dem Transportmittel 15 gehoben und auf das Transportmittel der Trocknungsvorrichtung abgelegt. Das Abheben des jeweiligen Profils kann mittels eines Abhebers, wie er beispielsweise in Figur 8 dargestellt ist, oder mittels eines Umsetzförderers erfolgen. Das Transportmittel in dem Trockner besteht aus einer Mehrzahl von Trägern, die hintereinander an einer Endlostransportkette vorgesehen sind und von dieser getaktet angetrieben werden. Vorzugsweise sind eine Mehrzahl von diesen Profilträgern/Transportketten/Transportmitteln parallel zueinander vorgesehen. Nach dem Einlegen eines neuen Profils am Einlauf des Trockners auf einen oder mehrere Profilträger fährt dieser durch den Trockner hindurch bis zu der Abhebeposition im Auslauf. Dort wird über eine ähnliche oder identische Abhebevorrichtung das Profil aus dem/den Profilträger(n) gehoben und auf einen Auslaufrollengang abgelegt, mittels dem es zu dem Auslauf 6 transportiert wird. Vorzugsweise erfolgt das Einlegen eines ungetrockneten Profils nicht gleichzeitig mit dem Abheben eines getrockneten Profils, sondern diese beiden Positionen werden vorzugsweise getrennt voneinander angefahren, d.h. nach dem Ablegen eines ungetrockneten Profils am Eingang des Trockners wird ein getrocknetes Profil am Ausgang des Trockners abgehoben usw. Vorzugsweise steht das Transportmittel beim Ablegen bzw. Abheben. Dadurch befinden sich die Profilträger immer in der exakten Einlege- bzw. der exakten Abhebeposition und Längendehnungen aus Verschleiß oder aufgrund von Temperaturschwankungen der Kette spielen für die Positionierung der Profilträger keine Rolle. Gegebenenfalls ist es aber auch möglich, dass die Profilträger eine Längsbewegung ausführen, welche sich nach der Längsbewegung des Überhebers orientiert und dadurch die Position der Profile auf dem Überheber relativ zu dem Profilträger hält. Das Ausfördern der Profile nach dem Trocknen kann durch profilierte Transportrollen oder unprofilierte gerade Transportsysteme erfolgen. Nach dem Trocknen kann das jeweilige Profil in einer bevorzugten Ausführungsform noch mit einer Schutzfolie überzogen werden und wird sodann, beispielsweise auf einer Palette, gelagert. Mit der erfindungsgemäßen Anlage können Profile beliebiger Art beschichtet werden. Vorzugsweise handelt es sich um Kunststoff-, insbesondere PVC- oder Metall, insbesondere Aluminium-Profile. Insbesondere werden Profile zur Herstellung eines Rahmens eines Fensters oder Tür mit der Anlage beschichtet.

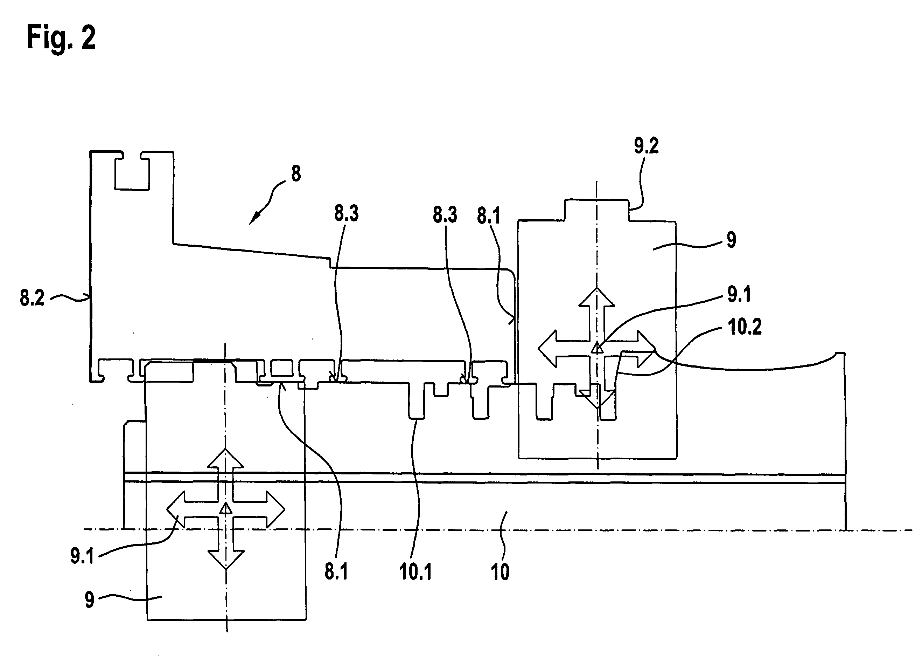

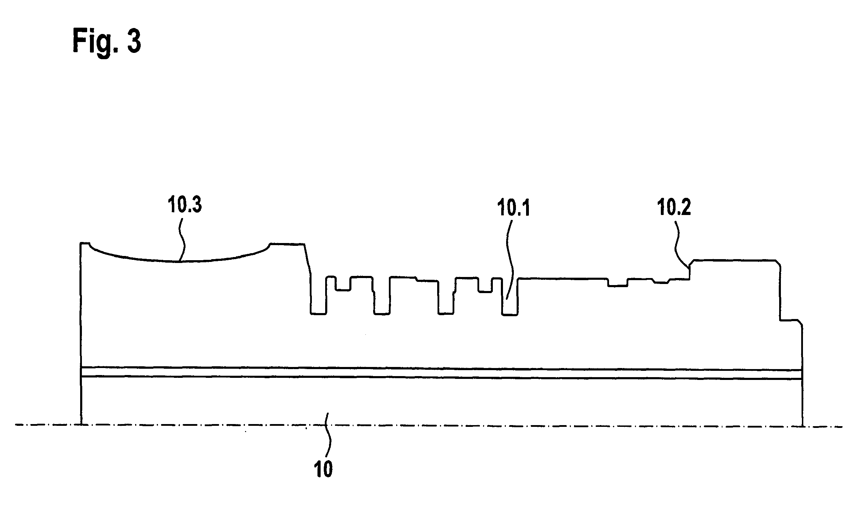

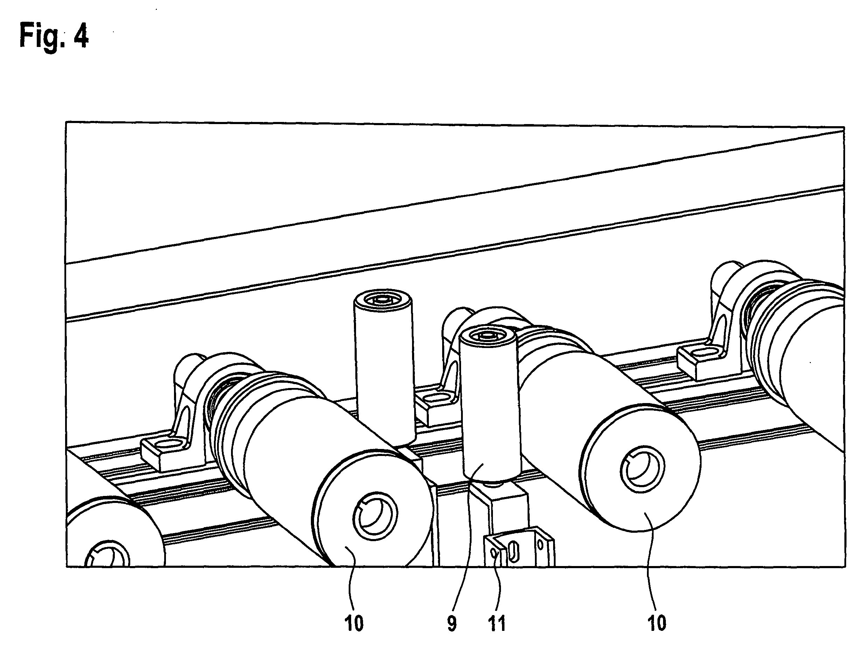

Figuren 2 und 3 zeigen Details des Transportmittels 15, auf dem ein zu beschichtendes Profil 8 dargestellt ist. Dieses Profil 8 soll an der Beschichtungsfläche 8.2 beschichtet werden. Um das Profil in einer exakten Position transportieren zu können, weist das Transportmittel eine profilierte Rolle 10 auf, die um eine horizontale Achse drehbar vorgesehen ist. Diese profilierte Transportrolle weist mindestens eine, hier eine Mehrzahl von Einbuchtungen 10.1 sowie mindestens einen Absatz 10.2 und/oder mindestens eine Auflagefläche 10.3 auf. Jede vertikale Führungsrolle 9 ist, wie durch die Doppelpfeile 9.1 dargestellt, um zwei senkrecht aufeinander stehende Raumrichtungen, die vorzugsweise in einer Ebene angeordnet sind, einstellbar vorgesehen. Alternativ kann zumindest eine Führungsrolle auch nur in eine Richtung verstellbar ausgeführt werden. Dadurch kann das Profil 8 seitlich geführt werden, ohne dass die Rollen 9 die zu beschichtende Fläche 8.2 berühren. Des Weiteren ist zu erkennen, dass die Rollen 9 vorzugsweise ebenfalls einen Absatz 9.2 aufweisen, wodurch wiederum die Flexibilität ihres Einsatzes zum seitlichen Führen des Profils 8 erhöht wird. Der Fachmann erkennt, dass es durch das Vorsehen einer Vielzahl von Einbuchtungen bzw. mindestens eines Absatzes und mindestens einer, vorzugsweise mehrerer Auflageflächen möglich ist, eine Vielzahl unterschiedlicher Profile zu beschichten, ohne dass die Rolle 10 bzw. die Rollen 9 ausgetauscht werden müssten. Da Anpassen der Rollen 9 an das jeweilige Profil erfolgt vorzugsweise automatisch, nachdem ein Werker der Anlage mitgeteilt hat, welches Profil als nächstes beschichtet werden soll. Besonders bevorzugt weist die Anlage ein Display auf, das dem Werker anzeigt, wie er das jeweilige Profil 8 auf die Rolle 10 legen soll. Figur 4 zeigt noch einmal die räumliche Anordnung der horizontalen, profilierten Rollen 10 bzw. der um eine vertikale Drehachse drehenden Rollen 9. Zwischen zwei Rollen 10 sind vorzugsweise zwei Rollen 9 angeordnet, die sich rechts und links von dem Profil befinden und die besonders bevorzugt bezogen auf die Laufrichtung des Profils einander nicht gegenüberliegend, sondern vorzugsweise versetzt zueinander vorgesehen sind. Beide Rollen 9 sind jeweils an einem Antrieb 11 zur Verstellung ihrer Lage, wie anhand der Figuren 2 und 3 erläutert worden ist, vorgesehen.

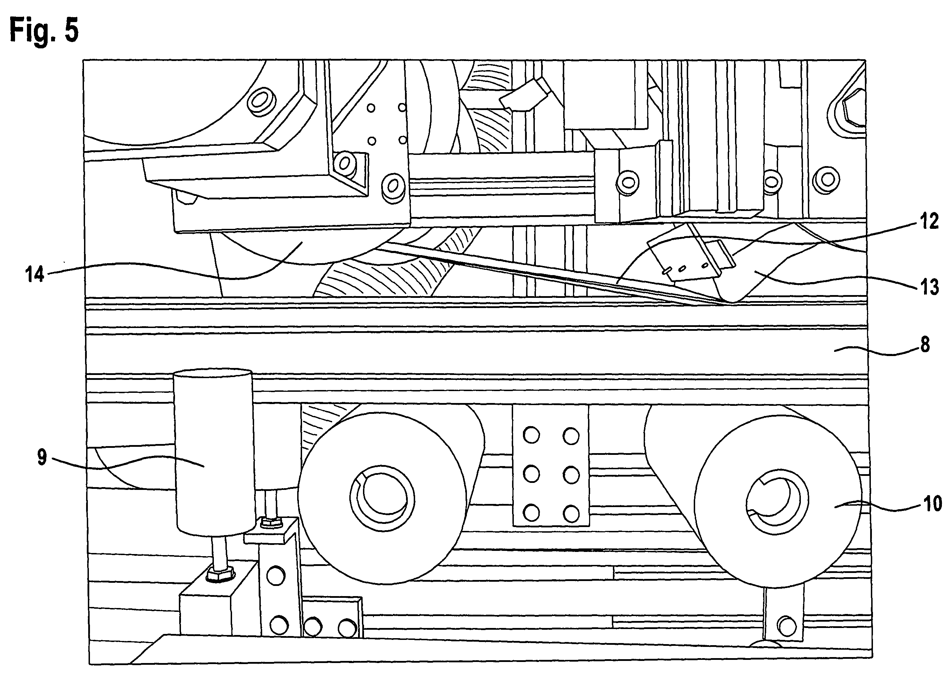

Figur 5 zeigt einen Teil der Vorbehandlungsstation 2 der erfindungsgemäßen Beschichtungsanlage. In dem vorliegenden Fall erfolgt die Entfernung von gelösten Verschmutzungen und/oder aufgetragenem Lösungsmittel mittels eines Reinigungstuchs 12, das in dem vorliegenden Fall durch ein vorzugsweise flexibles Andrückmittel 13 auf die zu reinigende Oberfläche gedrückt wird. Das zu beschichtende Profil bewegt sich relativ zu dem Reinigungsmittel, hier von links nach rechts. Das Reinigungsmittel ist in dem vorliegenden Fall ein Reinigungstuch, das kontinuierlich oder intermittierend von einer Vorratsrolle (rechte Rolle) abgerollt und gleichzeitig das verunreinigte Reinigungstuch aus einer Vorratsrolle 14 wieder aufgerollt wird. Die Bewegungsrichtung des Reinigungstuches ist vorzugsweise entgegengesetzt der Bewegungsrichtung des zu beschichtenden Profils. Das Ab bzw. Aufrollen kann kontinuierlich oder intermittierend erfolgen. Dadurch dass kontinuierlich oder semi-kontinuierlich neues unverbrauchtes Reinigungstuch zur Verfügung gestellt wird, ist die Reinigung der zu beschichtenden Profile von gleichbleibender Qualität.

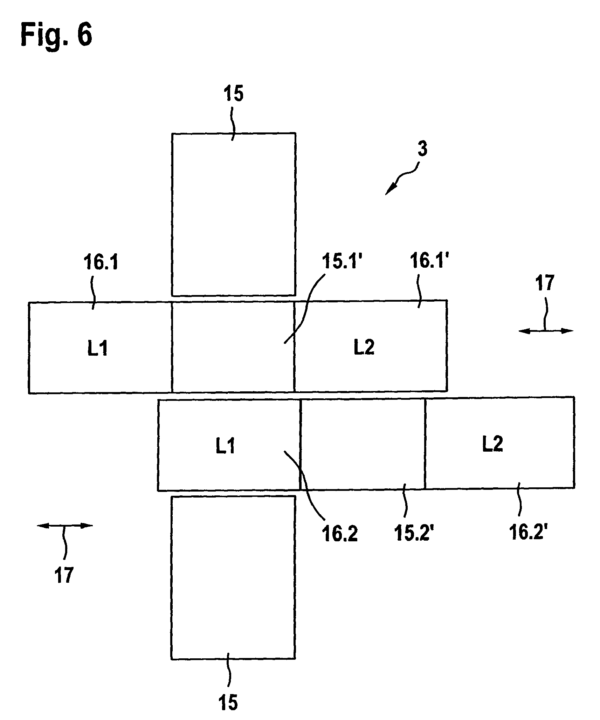

Figur 6 zeigt Details der Beschichtungsstation 3. Diese besteht in dem vorliegenden Fall aus zwei Einheiten, einer ersten Einheit 16.1, 15.1', 16.1' sowie einer zweiten Einheit 16.2, 15.2', 16.2, die jeweils, wie durch den Doppelpfeil 17 dargestellt, senkrecht zur Transportrichtung des Transportmittels 15 verschiebbar vorgesehen sind. Jede Einheit besteht jeweils aus zwei Beschichtungskammern 16.1, 16.1' sowie 16.2, 16.2', zwischen denen jeweils ein Transportmittel 15.1', 15.2' vorgesehen ist. In dem dargestellten Fall ist das Transportmittel 15.1' fluchtend mit dem Transportmittel 15 vorgesehen. Des Weiteren ist die Beschichtungskammer 16.2 fluchtend mit dem Transportmittel 15 vorgesehen, d.h. diese Beschichtungskammer 16.2 beschichtet in dem dargestellten Beispiel das Profil. In den Beschichtungskammern 16.1, 16.2 wird das Profil jeweils mit demselben Lack L1 beschichtet, wobei sich die Einlauf- bzw. Auslaufmatrize der beiden Beschichtungskammern 16.1, 16.2 unterscheiden können. Dasselbe gilt für die Beschichtungskammern 16.1', 16.2', wobei diese Beschichtungskammern das Profil mit dem Lack L2 beschichten. In dem dargestellten Beispiel wird das Profil mit dem Lack L1 beschichtet und das zu beschichtende Profil hat einen zu der Matrize der Kammer 16.2 passenden Querschnitt. Für den Fall dass die Farbe beibehalten, jedoch ein anderes Profil beschichtet werden soll, wird die untere Einheit nach links verschoben, so dass das Transportmittel 15.2' mit dem Transportmittel 15 fluchtet. Die obere Einheit wird nach rechts verschoben, so dass die Beschichtungskammer 16.1 mit dem Transportmittel 15 fluchtet. Sollen die Profile mit dem Lack L2 beschichtet werden, muss eine der Kammern 16.1' oder 16.2' fluchtend mit dem Transportmittel 15 vorgesehen werden. Durch diese Konfiguration der Beschichtungsstation 3 werden die Stillstandzeiten der Beschichtungsanlage bei einem Profil und/oder Beschichtungsmittelwechsel auf ein Minimum reduziert. Der Fachmann versteht, dass die beiden Einheiten auch nur mit jeweils einer Beschichtungskammer ausgestattet sein können. In diesem Fall ist zumindest ein schneller Wechsel des Beschichtungsmittels oder des Profils gewährleistet.

Desweiteren versteht der Fachmann, dass es auch möglich ist, nur eine der beiden Doppeleinheiten zu verwenden, um eine entsprechenden schnellen Wechsel durchzuführen.

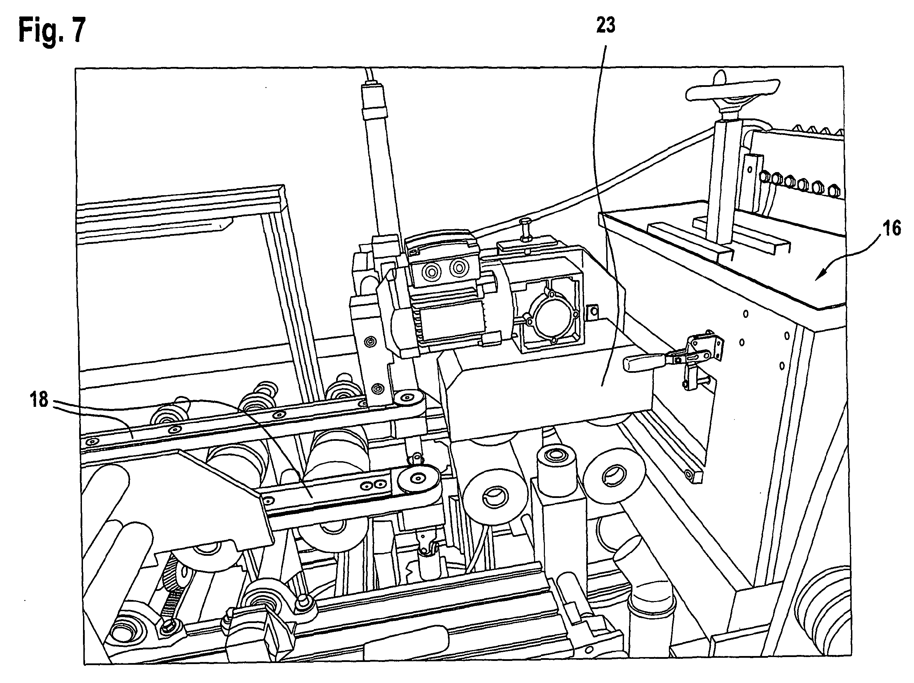

Figur 7 zeigt den Bereich unmittelbar stromaufwärts von der Beschichtungskammer. Deutlich zu erkennen sind die beiden separat in der Höhe und/oder Breite verstellbar angetriebenen Seitenlineale sowie das dreifach verstellbare (Höhe+Breite+Drehen) angetriebene Oberdrucksystem, das eine Doppelrolle aufweist, die mit der Oberseite des Profils in Eingriff steht. Ferner ist zu erkennen, dass sich zwischen den beiden Oberdruckrollen rechts und links eine Seitenführungsrolle befindet.

Figur 8 zeigt den Überheber 20, der in dem vorliegenden Fall als Kurbelschwinge mit einem Hebel 20.2 sowie einer Lagerbacke 20.1 ausgeführt ist. Zu sehen ist der Hebel 20.2 in der Abhebestellung (linke Stellung) sowie in der Übergabestellung (rechte Stellung) sowie in zwei Zwischenstellungen. Die Drehachse des Überhebers ist parallel zur Transportrichtung 5 vorgesehen. Die Lagerbacke 20.1 weist vorzugsweise dasselbe, zumindest ein ähnliches Profil auf wie die profilierte Rolle 10, so dass sie das Profil 8 in einer definierten Lage übernehmen und durch eine Drehung, hier im Uhrzeigersinn, von dem Transportsystem 15 aufnehmen und definiert an das Transportsystem des Trockners abgeben kann. Dieser Überheber ist im Einlauf vorgesehen und kann auch im Auslauf des Trockners eingesetzt werden.

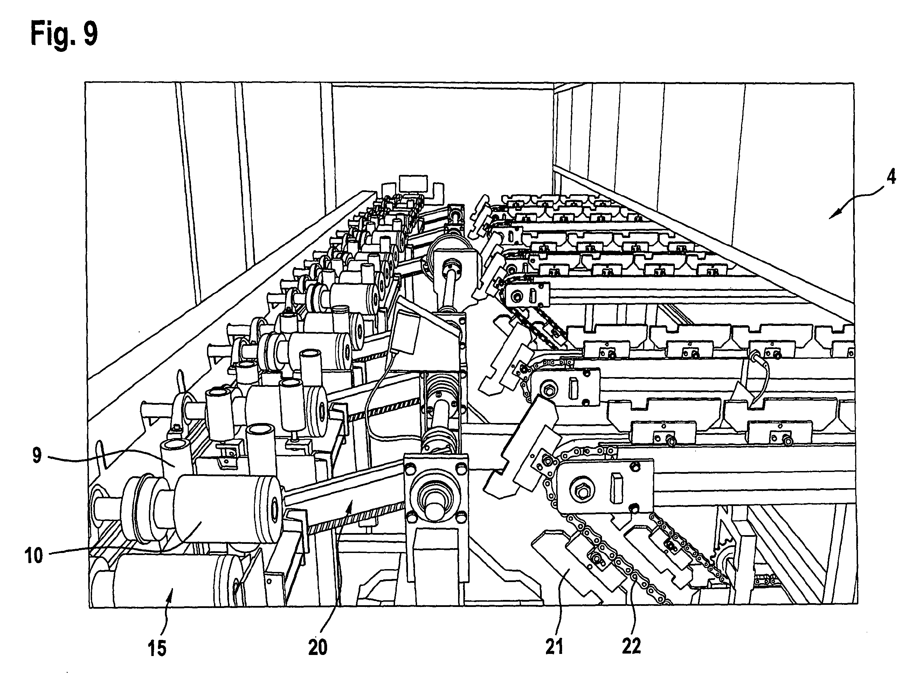

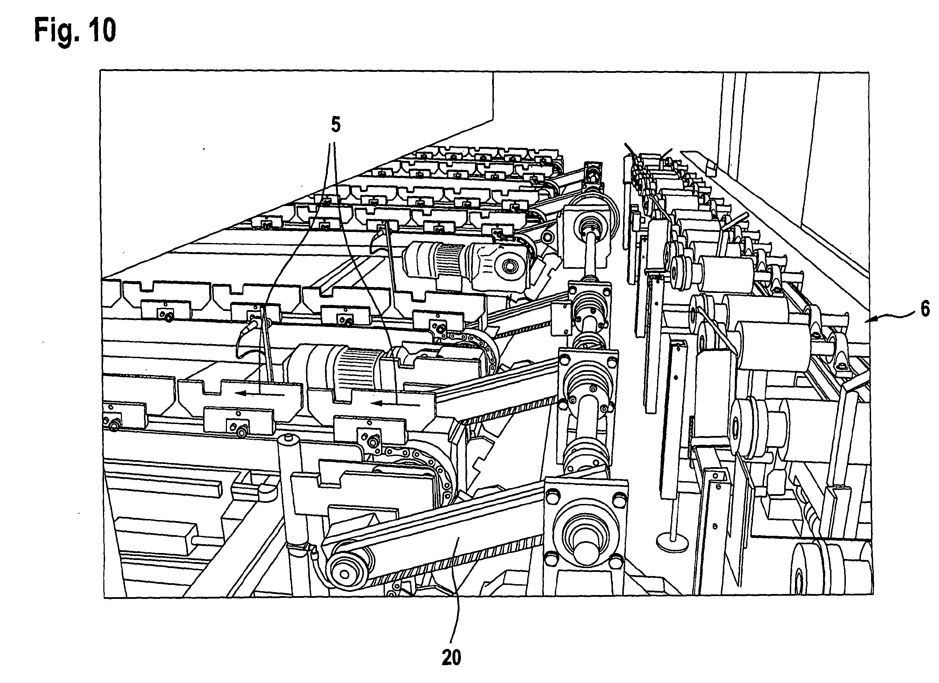

Figur 9 zeigt den Einlauf des Trockners. Links ist das Transportsystem 15 mit seinen horizontalen Rollen 10 und seinen vertikalen Rollen 9 zu sehen. Ganz rechts ist der Einlaufbereich der Trocknungsstation 4 zu sehen mit seinem Transportmittel, das aus einer Vielzahl von Endlosketten 22 besteht, an denen Profilträger 21 vorgesehen sind. In dem vorliegenden Fall ist die Trocknungsstation mit zwei parallelen Transportsystemen ausgestattet, so dass zwischen dem Transportmittel 15 und dem Einlaufbereich der Trocknungsstation auch zwei parallele unabhängig voneinander arbeitende Überheber 20 vorgesehen sind. Nach dem Einlegen eines neuen Profils am Einlauf (Einlegeposition) fährt die Transportkette durch den Trockner in die Abhebeposition am Auslaufpunkt. Dort wird durch eine ähnliche oder identische Abhebevorrichtung 20 das Profil aus den Profilträgern gehoben und auf einen Auslaufrollengang abgelegt (vgl. Figur 10). Danach fährt die Transportkette mit dem nächsten Profilträger auf die Einlegeposition. Vorteilhaft ist hierbei, dass sich die Einlegeposition und die Abhebeposition nicht in derselben Stopp-Position befinden. Hierdurch ist es möglich, über einen automatischen Kettenspanner die Längenausdehnung der Transportkette zu kompensieren, ohne dass es zu Positionsverschiebungen des Werkstückträgers in der Einlegeposition oder Abhebeposition kommt.

### Bezugszeichenliste:

- 1: Beschichtungsanlage
- 2: Vorbehandlungsstation
- 3: Beschichtungsstation
- 4: Trocknungsstation
- 5: Transportrichtung des Werkstücks
- 6: Auslauf
- 7: Einlauf
- 8: Kunststoff- und/oder Metallprofil
- 8.1: Anlagefläche
- 8.2: Beschichtungsfläche
- 8.3: Auflagefläche
- 9: Rolle mit vertikaler Drehachse
- 9.1: Ausrichtung
- 10: Rolle mit horizontaler Drehachse
- 10.1: Einbuchtung
- 10.2: Absatz
- 10.3: Auflagefläche
- 11: Antrieb der Verstellung der Rolle 9
- 12: Reinigungsmittel, Reinigungstuch
- 13: Andrückmittel
- 14: Vorratsspeicher, Rolle
- 15: Transportmittel
- 15': bewegliches Transportmittel
- 16: Beschichtungskammer
- 16.1: erste Beschichtungskammer für erstes Beschichtungsmedium
- 16.1': erste Beschichtungskammer für zweites Beschichtungsmedium
- 16.2: zweite Beschichtungskammer für erstes Beschichtungsmedium
- 16.2': zweite Beschichtungskammer für zweites Beschichtungsmedium
- 17: Bewegungsrichtung
- 18: Führung, Seitenlineal
- 19: Überdruckkapselung
- 20: Überheber
- 20.1: Lagerbacke
- 20.2: Hebel
- 20.3: Rotationsachse
- 21: Profilträger, Schlitten
- 22: Antriebsmittel, Kette
- 23: Oberdrucksystem
- L1: erstes Beschichtungsmedium
- L2: zweites Beschichtungsmedium

## Patentansprüche

1. Beschichtungsanlage (1), zur Beschichtung eines langgestreckten Kunststoff- und/oder Metallprofils (8) mit einem Beschichtungsmittel (L1, L2), mit einer Vorbehandlungsstation (2), einer Beschichtungsstation (3) und/oder einer Trocknungsstation (4), wobei ein Transportmittel (15) das Profil (8) entlang der Beschichtungsanlage (1) transportiert, wobei das Transportmittel eine profilierte Rolle (10) mit einer im Wesentlichen horizontalen Drehachse aufweist, die mindestens einen Absatz (10.2) und/oder eine Auflagefläche (10.3) aufweist, **dadurch gekennzeichnet, dass** die profilierte Rolle (10) zudem mindestens eine Einbuchtung (10.1) aufweist.

2. Beschichtungsanlage (1) nach Anspruch 1, **dadurch gekennzeichnet, dass** das Transportmittel (15) mehrere Rollen (9) mit einer vertikalen Drehachse aufweisen, die jeweils mindestens in einer Raumrichtung, vorzugsweise in zwei Raumrichtungen einstellbar sind.

3. Beschichtungsanlage (1) nach Anspruch 1, **dadurch gekennzeichnet, dass** die Rollen (9, 10) zumindest teilweise geerdet sind.

4. Beschichtungsanlage (1) nach einem der voranstehenden Ansprüche, **dadurch gekennzeichnet, dass** es einen Überheber (20) aufweist, der das Profil von dem Transportmittel (15) abhebt und auf einem weiteren Transportmittel absetzt, wobei der Überheber eine Lagerbacke (20.1) aufweist, die zumindest im Wesentlichen dieselbe Profilierung aufweist wie die Rolle (9).

5. Beschichtungsanlage (1) nach einem der voranstehenden Ansprüche, **dadurch gekennzeichnet, dass** die Vorbehandlungsstation (2) ein sich selbst erneuerndes Reinigungsmittel, insbesondere ein Reinigungstuch aufweist.

6. Beschichtungsanlage (1) nach Anspruch 5, **dadurch gekennzeichnet, dass** sich das Reinigungsmittel (12) gegen die Laufrichtung der Profile (8) bewegt.

7. Beschichtungsanlage (1) nach einem der voranstehenden Ansprüche, **dadurch gekennzeichnet, dass** die Beschichtungsstation (3) aus einer Einheit besteht, die zwei Beschichtungskammern (16.1, 16.1') und ein Transportmittel (15.1') aufweist und die quer zur Transportrichtung (5) des Profils (8) verschieblich vorgesehen ist.

8. Beschichtungsanlage (1) nach einem der voranstehenden Ansprüche, **dadurch gekennzeichnet, dass** die Beschichtungsstation (3) aus zwei Einheiten besteht, die jeweils zwei Beschichtungskammern (16.1 + 16.2 oder 16.1'+16.2') und jeweils ein Transportmittel (15.1' + 15.2') aufweisen und die jeweils quer zur Transportrichtung (5) des Profils (8) verschieblich vorgesehen sind.

9. Beschichtungsanlage (1) nach Anspruch 8, **dadurch gekennzeichnet, dass** jeweils zwei Beschichtungskammern (16.1, 16.1', 16.2, 16.2') rechts und links von dem Transportmittel (15') vorgesehen sind und jeweils an dasselbe Beschichtungsmittel (L1, L2) angeschlossen sind.

10. Beschichtungsanlage (1) nach einem der voranstehenden Ansprüche, **dadurch gekennzeichnet, dass**, stromabwärts von der Vorbehandlungsstation (2) und/oder von der Beschichtungsstation (3)', bezogen auf die die Transportrichtung des Transportmittels, eine Überdruckkammer über dem Transportmittel (15) vorgesehen ist.

## Claims

1. Coating plant (1), for the coating of an elongated synthetic-material- and/or metal profile (8) with a coating means (L1, L2), with a pre-treatment station (2), a coating station (3) and/or a drying station (4), wherein a transport means (15) transports the profile (8) along the coating plant (1), wherein the transport means comprises a profiled roller (10) with a substantially horizontal rotational axis, which comprises at least one shoulder (10.2) and/or one support surface (10.3), **characterised in that** the profiled roller (10) further comprises at least one indentation (10.1).

2. Coating plant (1) according to claim 1, **characterised in that** the transport means (15) comprise several rollers (9) with a vertical rotational axis, which are each adjustable in at least one spatial direction, preferably in two spatial directions.

3. Coating plant (1) according to claim 1, **characterised in that** the rollers (9, 10) are at least partially earthed.

4. Coating plant (1) according to one of the preceding claims, **characterised in that** it comprises a pull-over device (20) which lifts the profile from the transport means (15) and places it on a further transport means, wherein the pull-over device comprises a bearing cheek (20.1), which comprises at least substantially the same profiling as the roller (9).

5. Coating plant (1) according to one of the preceding claims, **characterised in that** the pre-treatment station (2) comprises a self-renewing cleaning means, especially a cleaning cloth.

6. Coating plant (1) according to claim 5, **characterised in that** the cleaning means (12) moves against the direction of travel of the profiles (8).

7. Coating plant (1) according to one of the preceding claims, **characterised in that** the coating station (3) consists of a unit, which comprises two coating chambers (16.1, 16.1') and a transport means (15.1') and which is provided in a manner displaceable transversely to the transport direction (5) of the profile (8).

8. Coating plant (1) according to one of the preceding claims, **characterised in that** the coating station (3) consists of two units, which each comprise two coating chambers (16.1 + 16.2 or 16.1' + 16.2') and in each case a transport means (15.1' + 15.2') and which are each provided in a manner displaceable transversely to the transport direction (5) of the profile (8).

9. Coating plant (1) according to claim 8, **characterised in that**,
in each case, two coating chambers (16.1, 16.1', 16.2, 16.2') are provided on the right and left of the transport means (15') and are connected in each case to the same coating means (L1, L2).

10. Coating plant (1) according to one of the preceding claims, **characterised in that**
downstream of the pre-treatment station (2) and/or of the coating station (3)', relative to the transport direction of the transport means, a positive-pressure chamber is provided above the transport means (15).

## Revendications

1. Appareil d'enduction (1) permettant l'enduction d'un profil de matériau synthétique et/ou de métal étiré en longueur (8) avec un moyen d'enduction (L1, L2), comportent un poste de prétraitement (2), un poste d'enduction (3) et/ou un poste de séchage (4), où un moyen de transport (15) achemine le profil (8) le long de l'appareil d'enduction (1), où le moyen de transport présente un rouleau profilé (10) avec un axe de rotation sensiblement horizontal, qui présente au moins un talon (10.2) et/ou une surface d'appui (10.3), caractérisée, que le rouleau profilé (10) présente en outre au moins échancrure (10.1).

2. Appareil d'enduction (1) selon la revendication 1, **caractérisé en ce que** le moyen de transport (15) comporte plusieurs rouleaux (9) avec un axe de rotation vertical, chacun étant réglable au moins dans une direction spatiale, de préférence dans deux directions spatiales.

3. Appareil d'enduction (1) selon la revendication 1, **caractérisé en ce que** les rouleaux (9, 10) sont au moins partiellement à la terre.

4. Appareil d'enduction (1) selon l'une des revendications précédentes, **caractérisé en ce qu'**il comporte un releveur (20), lequel releveur soulève le profil du moyen de transport (15) et le dépose sur un autre moyen de transport, lequel releveur présente une mâchoire d'appui (20.1), laquelle mâchoire est profilée sensiblement comme le rouleau (9).

5. Appareil d'enduction (1) selon l'une des revendications précédentes, **caractérisé en ce que** le poste de prétraitement (2) comporte un moyen de nettoyage auto-régénérant, en particulier une toile de nettoyage.

6. Appareil d'enduction (1) selon la revendication 5, **caractérisé en ce que** le moyen de nettoyage (12) se déplace dans le sens inverse des profils (8).

7. Appareil d'enduction (1) selon l'une des revendications précédentes, **caractérisé en ce que** le poste d'enduction (3) se compose d'une unité, qui présente deux chambres d'enduction (16.1, 16.1') et un moyen de transport (15.1') et qui est agencée pour se déplacer transversalement au sens de transport (5) du profil (8).

8. Appareil d'enduction (1) selon l'une des revendications précédentes, **caractérisé en ce que** le poste d'enduction (3) se compose de deux unités, qui présentent chacune deux chambres d'enduction (16.1 + 16.2 ou 16.1' +16.2') et chacune un moyen de transport (15.1' + 15.2') et qui sont agencée pour se déplacer transversalement au sens de transport (5) du profil (8).

9. Appareil d'enduction (1) selon la revendication 8, **caractérisé en ce que** respectivement deux chambres d'enduction (16.1, 16.1', 16.2, 16.2') sont prévues à droite et à gauche du moyen de transport (15') et qui respectivement sont connectées au même moyen d'enduction (L1, L2).

10. Appareil d'enduction (1) selon l'une des revendications précédentes, **caractérisé en ce que**, en aval du poste de prétraitement (2) et/ou du poste d'enduction (3)', par rapport au sens de transport du moyen de transport, il est prévu une chambre de surpression au-dessus du moyen de transport (15).
